# EUROPEAN PATENT APPLICATION

(11) **EP 4 070 865 A1**
(43) Date of publication of application: **12.10.2022**
(21) Application number: 21830213.1
(22) Date of filing: 28.05.2021
(51) Int. Cl.: A63F 13/525

(54) **METHOD AND APPARATUS FOR DISPLAYING VIRTUAL SCENE, AND DEVICE AND STORAGE MEDIUM**

(30) Priority: 24.06.2020 CN 202010589591
(71) Applicant: Tencent Technology (Shenzhen) Company Limited, Shenzhen, Guangdong 518057 (CN)
(72) Inventor: ZHOU, Jingqi, Shenzhen, Guangdong 518057 (CN); YUE, Zongyuan, Shenzhen, Guangdong 518057 (CN); LIN, Xueying, Shenzhen, Guangdong 518057 (CN); CHEN, Chu, Shenzhen, Guangdong 518057 (CN); JI, Mingyang, Shenzhen, Guangdong 518057 (CN)
(74) Representative: Eisenführ Speiser
(86) International application number: PCT/CN2021/096717
(87) International publication number: WO 2021/258994

(57) **Abstract**

A method and apparatus for displaying a virtual scene, and a device and a storage medium. The method comprises: drawing a first scene picture in a first render texture map (411), wherein the first scene picture is obtained by means of photographing a virtual scene by using a first virtual camera (410); displaying the first render texture map (411) in the virtual scene, wherein the virtual scene is used for presenting an activity; in response to the reception of an activity advancing signal, drawing a second scene picture in a second render texture map (421), wherein the second scene picture is obtained by means of photographing the virtual scene by using a second virtual camera (420); and replacing the first render texture map (411) in the virtual scene with the second render texture map (421), wherein when a virtual object within a view-finding range corresponding to a virtual camera in the virtual scene changes, a scene picture drawn in a render texture map changes.

## Description

### RELATED APPLICATION

This application claims priority to Chinese Patent Application No. 202010589591.6, entitled "METHOD AND APPARATUS FOR DISPLAYING VIRTUAL PICTURE SCROLL, DEVICE, AND STORAGE MEDIUM" and filed with the China National Intellectual Property Administration on June 24, 2020, which is incorporated herein by reference in its entirety.

### FIELD

This application relates to the field of computers, and in particular, to a method and an apparatus for displaying a virtual scene, a device, and a storage medium.

### BACKGROUND

Displaying a game progress in a form of a picture scroll is a common expression manner. For example, different levels of a game corresponding to an application are displayed by using different maps of a virtual picture scroll. The maps are sequentially arranged, and when a map receives an interactive operation triggered by a player, the player may enter a corresponding game level.

In the conventional technology, the expression method for the virtual picture scroll is to obtain the virtual picture scroll by splicing multiple preset static maps, and the static maps are transversely arranged in a virtual environment.

The player may drag the currently displayed virtual picture scroll left or right to view different static maps. However, because the static maps in the virtual picture scroll cannot change, the virtual picture can display limited content in a single display form.

### SUMMARY

Embodiments of this application provide a method and an apparatus for displaying a virtual scene, a device, and a storage medium, which can improve content richness of pictures displayed in the virtual scene and enrich the display form. The technical solutions are as follows.

According to an aspect of this application, the embodiments of this application provide a method for displaying a virtual scene. The method is performed by a terminal and includes:
drawing a first scene picture in a first rendering texture map, the first scene picture being obtained by photographing a virtual scene by a first virtual camera, and the first virtual camera being located at a first position in the virtual scene;
displaying the first rendering texture map in the virtual scene, the virtual scene being used for activity display;
drawing a second scene picture in a second rendering texture map in response to receiving an activity advancement signal, the second scene picture being obtained by photographing the virtual scene by a second virtual camera, the second virtual camera being located at a second position in the virtual scene, and the second position being different from the first position; and
replacing the first rendering texture map in the virtual scene with the second rendering texture map,
the scene picture drawn in the rendering texture map changing in a case that a virtual object within a viewing range corresponding to the virtual camera in the virtual scene changes.

According to another aspect of this application, the embodiments of this application provide an apparatus for displaying a virtual scene, including:
a first drawing module, configured to draw a first scene picture in a first rendering texture map, the first scene picture being obtained by photographing a virtual scene by a first virtual camera, and the first virtual camera being located at a first position in the virtual scene;
a map display module, configured to display the first rendering texture map in the virtual scene, the virtual scene being used for activity display;
a second drawing module, configured to draw a second scene picture in a second rendering texture map in response to receiving an activity advancement signal, the second scene picture being obtained by photographing the virtual scene by a second virtual camera, the second virtual camera being located at a second position in the virtual scene, and the second position being different from the first position; and
a map replacement module, configured to replace the first rendering texture map in the virtual scene with the second rendering texture map, the scene picture drawn in the rendering texture map changing in a case that a virtual object within a viewing range corresponding to the virtual camera in the virtual scene changes.

According to another aspect of this application, a computer device is provided, including a processor and a memory, the memory storing at least one instruction, at least one program, a code set, or an instruction set, the at least one instruction, the at least one program, the code set or the instruction set being loaded and executed by the processor to implement the method for displaying a virtual scene described in the foregoing aspect.

According to another aspect of this application, a computer-readable storage medium is provided, the computer-readable storage medium storing at least one instruction, at least one program, a code set, or an instruction set, the at least one instruction, the at least one program, the code set, or the instruction set being loaded and executed by a processor to implement the method for displaying a virtual scene described in the foregoing aspect.

According to an aspect of this application, a computer program product or a computer program is provided, the computer program product or the computer program including computer instructions, the computer instructions being stored in a computer-readable storage medium. A processor of a computer device reads the computer instructions from the computer-readable storage medium, and executes the computer instructions, to cause the computer device to implement the method for displaying a virtual scene provided in the foregoing aspect.

### BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show only some embodiments of this application, and a person of ordinary skill in the art may still derive other accompanying drawings from these accompanying drawings without creative efforts.
FIG. 1 is a structural block diagram of a computer system according to an exemplary embodiment of this application;
FIG. 2 is a flowchart of a method for displaying a virtual scene according to an exemplary embodiment of this application;
FIG. 3 is a schematic diagram of a principle for generating a rendering texture map according to an exemplary embodiment of this application;
FIG. 4 is a schematic diagram of an interface for generating a first rendering texture map according to an exemplary embodiment of this application;
FIG. 5 is a schematic diagram of an interface for generating a second rendering texture map according to an exemplary embodiment of this application;
FIG. 6 is a schematic diagram of an interface for replacing a rendering texture map according to an exemplary embodiment of this application;
FIG. 7 is a flowchart of a method for displaying a virtual scene according to another exemplary embodiment of this application;
FIG. 8 is a schematic diagram of a principle for moving a virtual camera according to an exemplary embodiment of this application;
FIG. 9 is a schematic diagram of an interface for moving a virtual camera according to an exemplary embodiment of this application;
FIG. 10 is a schematic diagram of a principle for a virtual camera based on different camera movement trajectories according to an exemplary embodiment of this application;
FIG. 11 is a flowchart of a method for displaying a virtual scene according to another exemplary embodiment of this application;
FIG. 12 is a schematic diagram of an interface for responding to an interactive operation according to an exemplary embodiment of this application;
FIG. 13 is a structural block diagram of an apparatus for displaying a virtual scene according to an exemplary embodiment of this application; and
FIG. 14 is a structural block diagram of a terminal according to an exemplary embodiment of this application.

### DETAILED DESCRIPTION

To make objectives, technical solutions, and advantages of this application clearer, the following further describes implementations of this application in detail with reference to the accompanying drawings.

First, terms involved in the embodiments of this application are introduced as follows.

Virtual environment: a virtual environment displayed (or provided) by an application when run on a terminal. The virtual environment may be a simulated environment of a real world, or may be a semi-simulated semi-fictional environment, or may be an entirely fictional environment. The virtual environment may be any one of a two-dimensional virtual environment, a 2.5-dimensional virtual environment, and a three-dimensional virtual environment. This is not limited in this application. A description is made by using an example in which the virtual environment is a three-dimensional virtual environment in the following embodiments.

Virtual object: a movable object in the virtual environment. The movable object may be a virtual character, a virtual animal, a cartoon character, or the like, such as a character, an animal, a plant, an oil drum, a wall, a stone, or the like displayed in a three-dimensional virtual environment. The virtual object is a three-dimensional model created based on a skeletal animation technology. Each virtual object has a respective shape and size in the three-dimensional virtual environment, and occupies some space in the three-dimensional virtual environment.

Virtual picture scroll: a picture scroll is a classic Chinese element symbol. In the embodiments of this application, the picture scroll element is applied to expression of a progress of a game level. In the conventional technology, the virtual picture scroll is formed by splicing multiple static maps.

Rendering texture map: a texture map that can be created and updated when a game is running, and is used for displaying the virtual picture scroll in the embodiments of this application. The virtual picture scroll displays at least one rendering texture map, and can replace and switch different rendering texture maps.

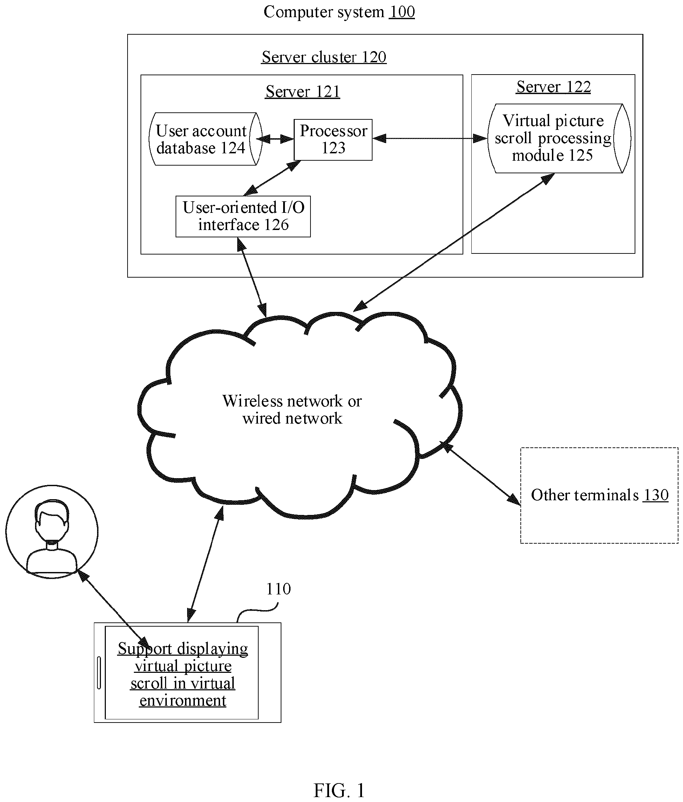

FIG. 1 is a structural block diagram of a computer system according to an exemplary embodiment of this application. The computer system 100 includes a terminal 110 and a server cluster 120.

A client supporting a virtual environment is installed and run on the terminal 110. When the terminal runs the client, an application interface of the client is displayed on a screen of the terminal 110. The client may be an online application or an offline application. In this embodiment, an example in which the client can support displaying a virtual picture scroll in the virtual environment is used for description. The terminal 110 can display a current game progress or all game levels through the virtual picture scroll.

A virtual scene displayed by the virtual picture scroll is a three-dimensional (3 Dimensional, 3D) scene. Further, the 3D scene may be composed of multiple layers of 3D pictures, such as a foreground picture and a background picture. A virtual object in the virtual environment is the foreground picture, and a scene outside the virtual object is the background picture. An effect that the virtual object moves in the background picture can be simulated by moving the foreground picture.

A device type of the terminal 110 includes at least one of a smartphone, a tablet computer, an e-book reader, a laptop computer, or a desktop computer.

FIG. 1 shows only one terminal. However, multiple other terminals 130 may access the server cluster 120 in different embodiments. In some embodiments, at least one terminal 130 is a terminal corresponding to a developer. A development and editing platform for the client of the virtual environment is installed on the terminal 130. The developer may edit and update the client on the terminal 130 and transmit an updated client installation package to the server cluster 120 through a wired or wireless network. The terminal 110 may download the client installation package from the server cluster 120 to update the client.

The terminal 110 and the other terminals 130 are connected to the server cluster 120 through a wireless network or a wired network.

The server cluster 120 includes at least one of a server, multiple servers, a cloud computing platform, or a virtualization center. The server cluster 120 is configured to provide a background service for the client supporting the virtual environment. The server cluster 120 is responsible for primary computing work, and the terminal is responsible for secondary computing work; or the server cluster 120 is responsible for secondary computing work, and the terminal is responsible for primary computing work; or a distributed computing architecture is adopted between the server cluster 120 and each terminal to perform collaborative computing.

The foregoing terminals and servers are all computer devices.

In a schematic example, the server cluster 120 includes a server 121 and a server 122. The server 121 includes a processor 123, a user account database 124, and a user-oriented input/output (I/O) interface 126. The server 122 includes a virtual picture scroll processing module 125. The processor 123 is configured to load instructions stored in the server 121, and process data in the user account database 124 and the virtual picture scroll processing module 125. The user account database 124 is configured to store data of user accounts used by the terminal 110 and the other terminals 130, for example, avatars of the user accounts, nicknames of the user accounts, historical interactive operation records of the user accounts on the virtual picture scroll, and service zones of the user accounts. The virtual picture scroll processing module 125 is configured to control displaying of the virtual picture scroll, and switch and replace dynamic maps according to a received interactive operation. The user-oriented I/O interface 126 is configured to establish communication with the terminal 110 through a wireless network or a wired network for data exchange.

A method for displaying a virtual picture scroll in a virtual environment provided in the embodiments of this application is described with reference to the foregoing description of the virtual environment. An example in which an execution body of the method is the terminal 110 shown in FIG. 1 is used for description. An application is run on the terminal 110, and the application is a program supporting the virtual environment.

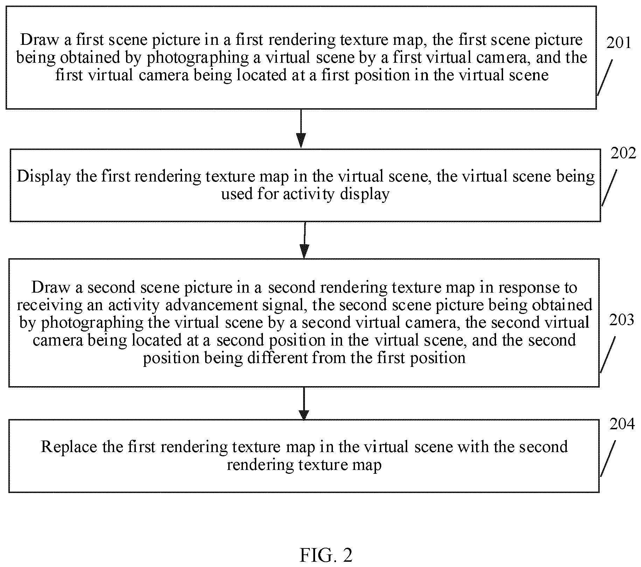

FIG. 2 is a flowchart of a method for displaying a virtual scene according to an exemplary embodiment of this application. The method is applicable to the terminal 110 in the computer system shown in FIG. 1. The method includes steps 201 to 204.

Step 201. Draw a first scene picture in a first rendering texture map, the first scene picture being obtained by photographing a virtual scene by a first virtual camera, and the first virtual camera being located at a first position in the virtual scene.

In the conventional technology, a virtual picture scroll is formed by splicing multiple static maps. The static maps are preset maps and do not change as the virtual scene changes.

In the embodiments of this application, when a user interface displayed by the terminal is a scene picture of the virtual scene, for example, a scene picture of the virtual picture scroll, first, the first rendering texture map is obtained to display the virtual picture scroll. The first scene picture is drawn in the first rendering texture map, the first scene picture being obtained by photographing the virtual scene by the first virtual camera, and the first virtual camera being located at the first position in the virtual scene. Therefore, when the virtual scene or a virtual object in the virtual scene changes, it can be tracked by using the first virtual camera, so that the photographed first scene picture also dynamically changes, instead of being statically displayed as the virtual picture scroll in the conventional technology.

The first virtual camera has an angle of view when photographing the virtual scene. The angle of view may be a preset angle of view or an observation angle of view that simulates a user observing the virtual picture scroll in the virtual environment. In the embodiments of this application, the angle of view of the virtual camera is an angle when the virtual scene is observed at a fixed position in the virtual environment. For example, the first virtual camera is located at the first position in the virtual scene, and the first virtual camera photographs the virtual scene at an angle of view of the fixed position to obtain the first scene picture.

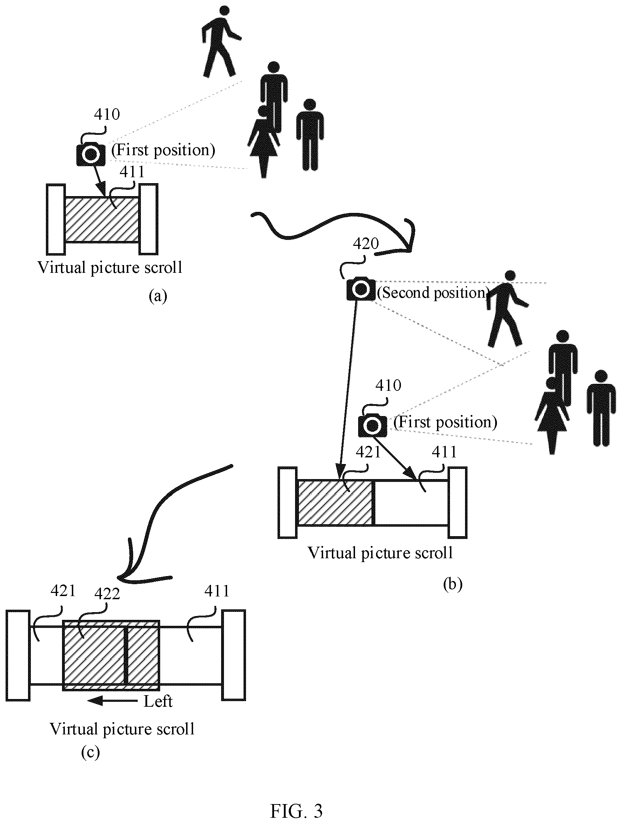

As shown in FIG. 3, in FIG. 3(a), a shadow region in the virtual picture scroll is the scene picture displayed by the terminal. In an initial process of the game, a first virtual camera 410 is first set to photograph the virtual scene to obtain the first scene picture, and the first scene picture is drawn in a first rendering texture map 411. As shown in the figure, the first virtual camera 410 is set at the first position under the angle of view.

Step 202. Display the first rendering texture map in the virtual scene, the virtual scene being used for activity display.

At an initial stage of the game, the virtual scene picture displayed by the terminal is the first rendering texture map, the virtual scene being used for activity display. In an example, the virtual picture scroll picture displayed by the terminal is the first rendering texture map, and the picture scroll is used for displaying a level in a form of a picture scroll. In order to advance a game process, an interactive control is further displayed on a display picture of the virtual picture scroll, and the interactive control is configured to advance a current game process or perform an interactive operation on a current display picture of the virtual picture scroll.

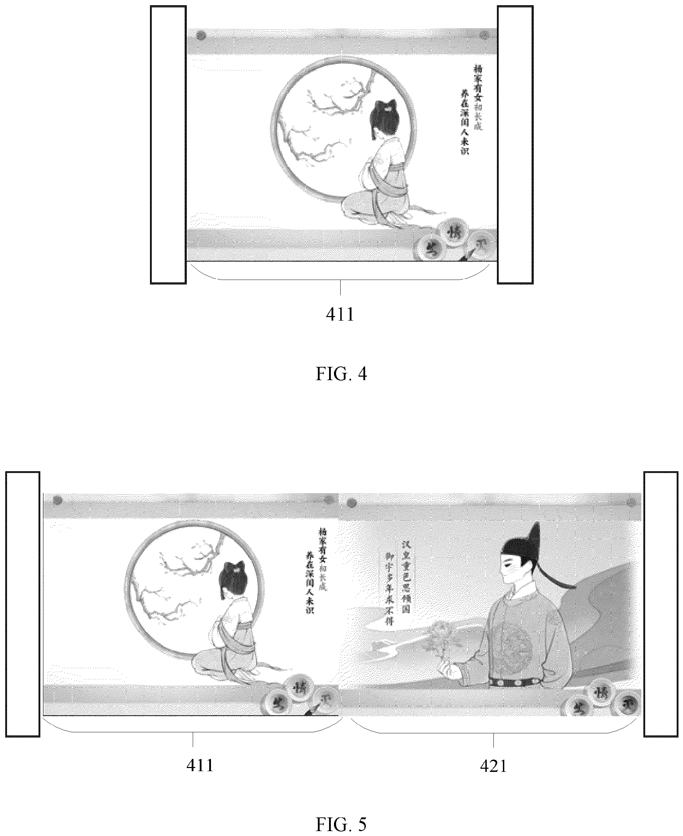

As shown in FIG. 4, a scene picture shown in the figure is displayed on the first rendering texture map 411. Further, the user can slide the current scene picture, and the terminal generates a level advancement signal according to the sliding operation.

In the embodiments of this application, the virtual scene is a 3D scene. Further, the 3D scene may be composed of multiple layers of 3D pictures, such as a foreground picture and a background picture. As shown in FIG. 4, the virtual object presented by the girl is the foreground picture, and the scene outside the virtual object is the background picture. An effect that the virtual object moves in the background picture can be simulated by moving the foreground picture. Alternatively, as shown in FIG. 3(b), the virtual object in the virtual scene is a 3D virtual object, and the 3D virtual object can be controlled to walk in the virtual scene.

Step 203. Draw a second scene picture in a second rendering texture map in response to receiving an activity advancement signal, the second scene picture being obtained by photographing the virtual scene by a second virtual camera, the second virtual camera being located at a second position in the virtual scene, and the second position being different from the first position.

In an example, the activity advancement signal may be a level advancement signal, and the virtual scene picture may be displayed through the virtual picture scroll. When a level advancement condition is met (such as completing a game task or decryption task corresponding to the current scene picture), the level advancement signal is triggered, and correspondingly, the player can unlock a next scene picture in the virtual picture scroll. According to the operation of triggering the level advancement signal, the terminal draws a second scene picture in a second rendering texture map when receiving the level advancement signal. Similarly, the second scene picture is obtained by photographing the virtual scene by a second virtual camera, the second virtual camera being located at a second position in the virtual scene.

The virtual scene is preset. Based on a limited display range of the terminal, a complete virtual scene cannot be displayed by the first virtual camera. Therefore, the first scene picture and the second scene picture are different scene pictures in the virtual scene, and the second position is different from the first position.

As shown in FIG. 3(b), if the virtual object in the virtual scene is a 3D virtual object, after the level advancement signal is received, a second scene picture is drawn in a second rendering texture map 421. The second scene picture is obtained by a second virtual camera 420 photographing the virtual object in the virtual scene at an angle of view of the second position. After the photographing, a current scene picture displayed by the virtual picture scroll is the second rendering texture map 421 (that is, a shadow part).

Further as shown in FIG. 5, a scene picture shown in the figure is displayed on the second rendering texture map 421. After the player unlocks a current level and advances to start a next level, the terminal enables a new virtual camera, that is, the second virtual camera, and draws the second scene picture photographed by the second virtual camera on the second rendering texture map 421. The second rendering texture map 421 may be displayed on one side of the previous rendering texture map (that is, the first rendering texture map 411).

Step 204. Replace the first rendering texture map in the virtual scene with the second rendering texture map.

Based on the received activity advancement signal, such as the level advancement signal, after the second rendering texture map is obtained, because the virtual scene picture can be displayed through the virtual picture scroll, the virtual picture scroll picture displayed by the terminal transits from the first rendering texture map to the second rendering texture map.

In an example, as shown in FIG. 3(c), the player can perform a sliding operation on the virtual picture scroll, such as sliding the current scene picture to the left, and during the sliding operation, the scene picture presented by the player vision is a scene picture 422 changing dynamically. When the sliding operation stops, the scene picture 422 is determined.

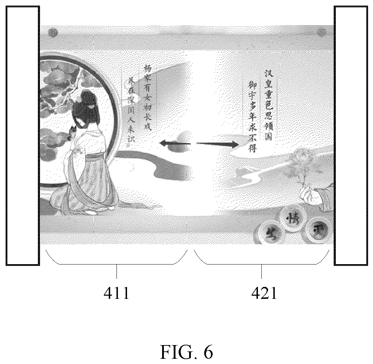

Further as shown in FIG. 6, in an actual map replacing process, a dynamic transition process is presented. That is, when the first rendering texture map 411 in the virtual picture scroll is replaced with the second rendering texture map 421, there is a transition picture shown in the figure.

The foregoing FIG. 3(a) to FIG. 3(c) are schematic diagrams of a principle for generating the rendering texture map, and FIG. 4 to FIG. 6 are schematic diagrams of interfaces for generating the rendering texture map after bringing in a visible virtual environment.

In addition, the scene picture drawn in the rendering texture map changes in a case that a virtual object within a viewing range corresponding to the virtual camera in the virtual scene changes. In an example, the virtual object in the virtual scene includes multiple display pictures, and different display pictures are triggered by different interactive operations. Therefore, in a case that the background picture remains unchanged, a picture change of the virtual object can be triggered through a corresponding interactive operation. Correspondingly, the scene picture photographed by the virtual camera also changes. That is, the scene picture drawn in the rendering texture map changes.

In summary, in the embodiments of this application, when the virtual picture scroll is initially displayed, the first scene picture drawn by the first rendering texture map is displayed. Different from the manner for displaying static maps in the conventional technology, the first scene picture is photographed by a first virtual camera corresponding to the map, which can implement dynamic tracking of the scene picture. Further, based on a level display function of the virtual picture scroll, when the level advancement signal is received, the second virtual camera is reset, the photographed second scene picture is drawn on the second rendering texture map, and then the first rendering texture map in the virtual picture scroll is replaced with the second rendering texture map. In addition, the scene picture drawn in the rendering texture map changes in a case that a virtual object within a viewing range corresponding to the virtual camera in the virtual scene changes. Compared with the method of displaying a virtual picture scroll through static maps in the conventional technology, the solutions provided in the embodiments of this application can improve content richness of pictures displayed in the virtual picture scroll and enrich the display form.

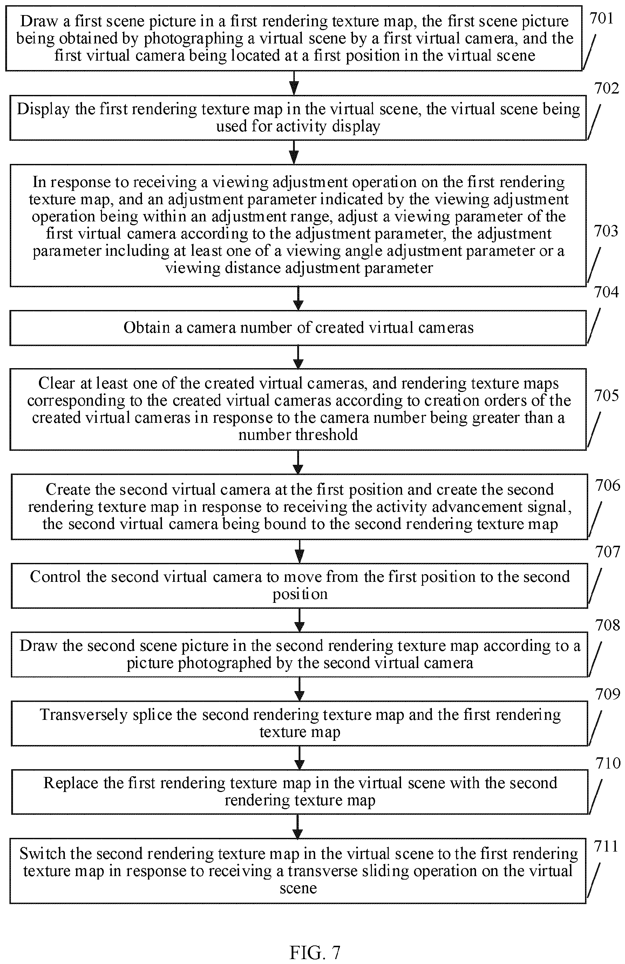

FIG. 7 is a flowchart of a method for displaying a virtual scene according to an exemplary embodiment of this application. The method is applicable to the terminal 110 in the computer system shown in FIG. 1. The method includes steps 701 to 711.

Step 701. Draw a first scene picture in a first rendering texture map, the first scene picture being obtained by photographing a virtual scene by a first virtual camera, and the first virtual camera being located at a first position in the virtual scene.

For this step, refer to step 201, and details are not described again in the embodiments of this application.

Step 702. Display the first rendering texture map in the virtual scene, the virtual scene being used for activity display.

For this step, refer to step 202, and details are not described again in the embodiments of this application.

Step 703. In response to receiving a viewing adjustment operation on the first rendering texture map, and an adjustment parameter indicated by the viewing adjustment operation being within an adjustment range, adjust a viewing parameter of the first virtual camera according to the adjustment parameter, the adjustment parameter including at least one of a viewing angle adjustment parameter or a viewing distance adjustment parameter.

In an implementation, each rendering texture map is provided with an adjustment parameter related to viewing, and the adjustment parameter includes at least one of a viewing angle adjustment parameter or a viewing distance adjustment parameter.

When set, the first virtual camera is fixed in a viewing parameter at the first position. In response to receiving the viewing adjustment operation on the first rendering texture map, and the adjustment parameter indicated by the viewing adjustment operation being within the adjustment range, the viewing parameter of the first virtual camera is adjusted according to the adjustment parameter.

Step 704. Obtain a camera quantity of created virtual cameras.

Step 705. Clear at least one of the created virtual cameras, and rendering texture maps corresponding to the created virtual cameras according to creation orders of the created virtual cameras in response to the camera quantity being greater than a quantity threshold.

In an implementation, considering that a new virtual camera and rendering texture map need to be created each time a level is advanced, memory usage is overly occupied and smooth advancement of a game process is affected. Therefore, a determination mechanism about the camera quantity is added. By introducing the foregoing mechanism, when the quantity of virtual cameras is large, the terminal can delete virtual cameras created earlier, to reduce memory usage of a game application.

In an example, the quantity threshold is set to 8. When the quantity of the created virtual cameras reaches 8, the terminal obtains creation time of each created virtual camera, arranges the virtual cameras according to creation time from early to late to obtain a creation order list of the virtual cameras, and eliminates the first two created virtual cameras. Further, after elimination, if a new virtual camera is created, information of the new virtual camera is directly recorded in the last position of the creation order list, so that when the camera quantity reaches the quantity threshold next time, there is no need to re-obtain the creation time of all created virtual cameras, and the two created virtual cameras in the top order in the creation order list can be directly deleted.

Step 706. Create the second virtual camera at the first position and create the second rendering texture map in response to receiving the activity advancement signal, the second virtual camera being bound to the second rendering texture map.

In order to achieve a natural transition effect (that is, a camera movement effect) when the first rendering texture map is replaced with the second rendering texture map, the second virtual camera is created at a position of a previous virtual camera. That is, the second virtual camera is created at the first position and the second rendering texture map is created. The second virtual camera is bound to the second rendering texture map. Therefore, when the second virtual camera moves from the first position to the second position, the scene picture changes, to achieve a camera movement effect of natural transition. In a specific example, the received activity advancement signal may be a level advancement signal.

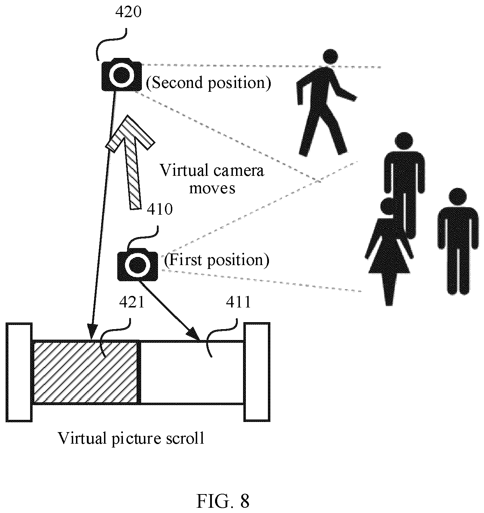

As shown in FIG. 8, the first virtual camera 410 is located at the first position shown in the figure. When the level advancement signal is received, the second virtual camera 420 (not shown in the figure) is created at the first position, and then the second virtual camera 420 at the first position is moved until the second virtual camera 420 is moved to the second position shown in the figure.

Step 707. Control the second virtual camera to move from the first position to the second position.

In the process of controlling the second virtual camera to move from the first position to the second position, the terminal queries the second position from a camera position list according to the first position, the camera position list including position information of virtual cameras in different levels. Further, the terminal controls the second virtual camera to move from the first position to the queried second position, the second position corresponding to a camera position of a next level.

The foregoing camera movement effect of moving from the first position to the second position is presented on the interface of the terminal. Therefore, in order to achieve a good camera movement effect, the terminal queries a target camera movement trajectory between the first position and the second position from a camera movement trajectory list, and controls the second virtual camera to move from the first position to the second position according to the target camera movement trajectory. The camera movement trajectory list includes camera movement trajectory information during movement of the virtual camera moves between different positions, so that the terminal rapidly moves the second virtual camera, and based on the preset camera movement trajectory, a natural transition effect during replacing the rendering texture map is further improved.

The camera movement trajectory may be a straight camera movement trajectory, a curved camera movement trajectory, or other preset camera movement trajectories. Game developers can preset camera movement trajectories between different camera positions according to needs of picture switching effects.

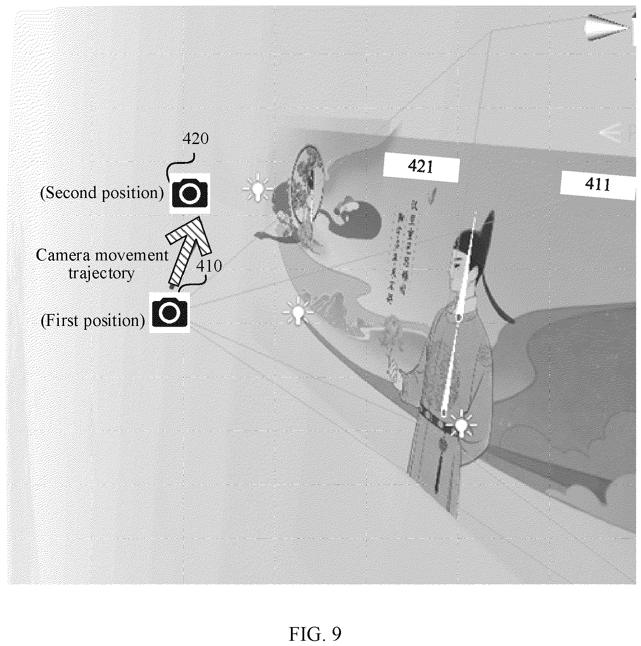

In an example, the camera movement trajectory is a straight camera movement trajectory. FIG. 9 shows a camera movement scene in which the second virtual camera moves from the first position to the second position. If the first rendering texture map is as shown in the figure, in response to receiving the level advancement signal, the terminal creates the second virtual camera at the first position of the first virtual camera, and controls the second virtual camera to move from the first position to the second position according to a camera movement trajectory shown by an arrow in the figure.

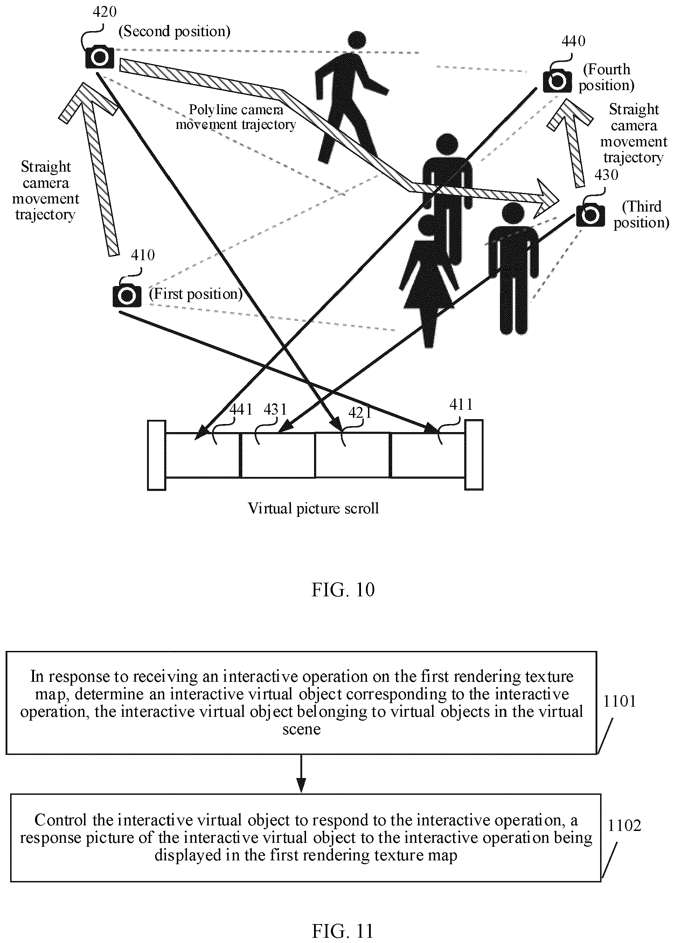

In another example, the camera movement trajectory includes at least two types of camera movement trajectories according to the needs of picture switching effects. As shown in FIG. 10, in a case that there are multiple created virtual cameras, different camera movement trajectories of the virtual cameras can achieve different picture switching effects, so as to improve a visual display effect. For example, a camera movement trajectory between the first virtual camera 410 and the second virtual camera 420 is a straight camera movement trajectory, a camera movement trajectory between the second virtual camera 420 and a third virtual camera 430 is a polyline camera movement trajectory, and a camera movement trajectory between the third virtual camera 430 and a fourth virtual camera 440 is still a straight camera movement trajectory. A scene picture photographed by the first virtual camera 410 is the first rendering texture map 411, a scene picture photographed by the second virtual camera 420 is the second rendering texture map 421, a scene picture photographed by the third virtual camera 430 is a third rendering texture map 431, and a scene picture photographed by the fourth virtual camera 440 is a fourth rendering texture map 441.

Step 708. Draw the second scene picture in the second rendering texture map according to a picture photographed by the second virtual camera.

Further, after the second virtual camera is moved, at the second position, the terminal draws the second scene picture in the second rendering texture map according to a picture photographed by the second virtual camera.

Step 709. Transversely splice the second rendering texture map and the first rendering texture map.

Step 710. Replace the first rendering texture map in the virtual scene with the second rendering texture map.

For this step, refer to step 204, and details are not described again in the embodiments of this application.

Step 711. Switch the second rendering texture map in the virtual picture scroll to the first rendering texture map in response to receiving a transverse sliding operation on the virtual scene.

In an implementation, step 709 is further included after step 708, and step 711 is further included after step 710. Although in an interface displayed by the terminal, only a scene picture corresponding to a single rendering texture map is displayed, any rendering texture map is a part of the virtual scene. In an example, the virtual scene picture can be displayed through the virtual picture scroll. Therefore, after the second scene picture is drawn in the second rendering texture map according to a picture photographed by the second virtual camera, the second rendering texture map and the first rendering texture map can be transversely spliced to implement an example of step 711. For example, after a transverse sliding operation on the virtual picture scroll is received, the second rendering texture map in the virtual picture scroll is switched to the first rendering texture map.

The transverse sliding operation may be one of a left sliding operation or a right sliding operation. FIG. 5 is a schematic diagram of transversely splicing the second rendering texture map and the first rendering texture map, and FIG. 6 is a schematic diagram of a process of switching the rendering texture map according to the transverse sliding operation on the virtual picture scroll.

In the embodiments of this application, when the level advancement signal is received, the second virtual camera is created at the first position, and a natural transition effect when the first rendering texture map is replaced with the second rendering texture map is achieved in the process of moving the second virtual camera from the first position to the second position.

In the embodiments of this application, based on the level advancement effect of the virtual picture scroll, the terminal is preset with the camera position list and the camera movement trajectory list for different levels or game progresses, so as to implement effective control of scene switching. The camera movement trajectory list does not include a single camera movement trajectory, thereby improving camera movement effects when different levels are advanced.

In the embodiments of this application, a determination mechanism about the camera quantity is further provided, so that when the quantity of virtual cameras is large, the terminal can delete virtual cameras created earlier, to reduce memory usage of a game application.

In the embodiments of this application, different rendering texture maps can be spliced, to achieve a display effect of the virtual picture scroll, and based on the transverse sliding operation of the virtual picture scroll triggered by the user, the second rendering texture map in the virtual picture scroll can be switched to the first rendering texture map, which makes a transition effect of picture switching more natural.

In the embodiments of this application, each rendering texture map is provided with an adjustment parameter related to viewing, and the adjustment parameter includes at least one of a viewing angle adjustment parameter or a viewing distance adjustment parameter, so as to implement user-defined adjustment of a display picture of the virtual picture scroll and improve operability and visual experience of the user on the virtual picture scroll.

In an implementation, a virtual environment is a 3D scene. That is, the 3D scene is composed of multiple layers of 3D pictures, including a foreground picture and a background picture. If the foreground picture is a 2D picture, it can be set that when an interactive operation is performed on the 2D picture, the virtual environment transforms the 2D picture to respond to the interactive operation.

FIG. 11 is a flowchart of a method for displaying a virtual scene according to another exemplary embodiment of this application. The method is applicable to the terminal 110 in the computer system shown in FIG. 1. After step 202 or step 702, steps 1101 and 1102 are included.

Step 1101. In response to receiving an interactive operation on the first rendering texture map, determine an interactive virtual object corresponding to the interactive operation, the interactive virtual object belonging to virtual objects in the virtual scene.

Step 1101 includes the following content 1 to 3:

Content 1. Determine a first interactive coordinate of the interactive operation in the first rendering texture map.

The first interactive coordinate is a 2D coordinate. That is, the user triggers a 2D picture of a terminal display interface, and a triggered position may determine a 2D coordinate corresponding to the interactive operation.

In some embodiments, the first interactive coordinate is a coordinate of a touch point.

Content 2. Map the first interactive coordinate to a second interactive coordinate in the virtual scene according to a viewing angle of the first virtual camera.

Further, in the virtual scene, different virtual objects correspond to different 3D coordinates. Therefore, the terminal can determine a 3D coordinate corresponding to the interactive operation according to the first interactive coordinate and the viewing angle of the first virtual camera. That is, the first interactive coordinate is mapped to the second interactive coordinate in the virtual scene.

In some embodiments, according to the first interactive coordinate and the viewing angle, the terminal determines a ray with the first interactive coordinate as a starting point and the viewing angle as a direction, and determines an intersection coordinate of the ray and the virtual object in the virtual scene as the second interactive coordinate.

Content 3. Determine a virtual object located at the second interactive coordinate in the virtual scene as the interactive virtual object.

The terminal maps the 2D coordinate (that is, the first interactive coordinate) under the interactive operation to the 3D coordinate (that is, the second interactive coordinate) according to the viewing angle of the first virtual camera, thereby determining the interactive virtual object.

Step 1102. Control the interactive virtual object to respond to the interactive operation, a response picture of the interactive virtual object to the interactive operation being displayed in the first rendering texture map.

In some embodiments, the terminal controls the interactive virtual object to perform interactive response according to an operation type of the interactive operation. For example, when the interactive operation is a dragging operation, the interactive virtual object is controlled to move in the virtual scene. When the interactive operation is a drawing operation, a virtual prop corresponding to the drawing operation is controlled to be generated in the virtual scene.

In an implementation, the virtual object included in the virtual environment is classified into an interactable object and a non-interactable object. For the interactable object, each interactable object is preset with at least one interactive special effect or interactive picture. For example, an interactable object 1 corresponds to 3 types of interactive special effects, and the interactive special effects are triggered by different interactive operations. For example, the user clicks the interactable object 1 to trigger displaying an interactive special effect A, presses and holds the interactable object 1 to trigger displaying an interactive special effect B, and double-clicks the interactable object 1 to trigger displaying an interactive special effect C. Alternatively, an interactable object 1 is provided with at least one interactive control, and different interactive special effects are displayed by operating different interactive controls.

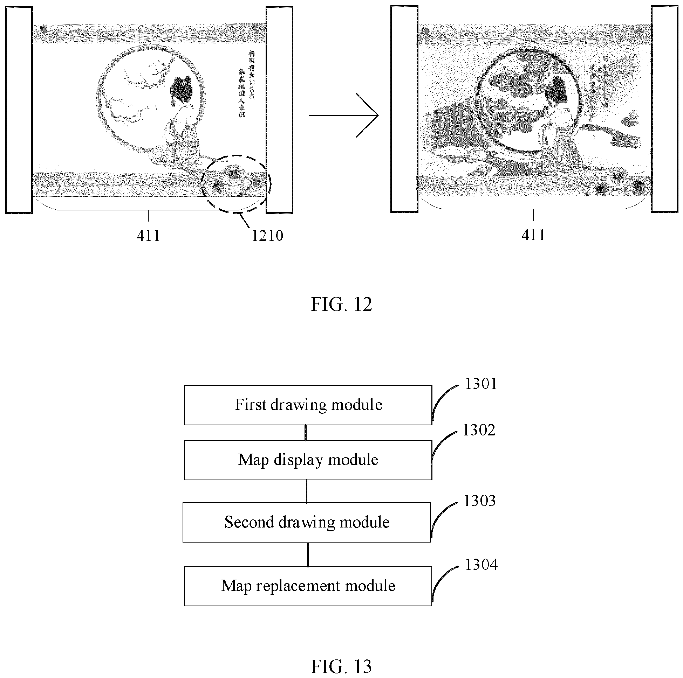

In an example, as shown in FIG. 12, the interactive virtual object is the little girl in the first rendering texture map 411, and the interactive virtual object is an interactable object. Further, the interactive virtual object is provided with an interactive control 1210, configured to perform the interactive operation on the interactive virtual object in the first rendering texture map 411. For example, by triggering an intermediate control in the interactive control 1210, appearance of the little girl (interactive virtual object) in the first rendering texture map 411 can be changed.

In the embodiments of this application, when the virtual environment is a 3D scene, the user can perform the interactive operation on the virtual object, and the terminal can control the interactive virtual object to respond to the interactive operation. Compared with the method for displaying static maps in the conventional technology, the embodiments of this application can not only implement natural transition of converting or switching different rendering texture maps in the foregoing embodiments, but also can respond to the interactive operation of the user on the virtual object. That is, when there is no rendering texture map switched or replaced, a dynamic change of the scene picture is implemented, visual experience of the user is further improved, and game operation content is enriched.

FIG. 13 is a structural block diagram of an apparatus for displaying a virtual scene according to an exemplary embodiment of this application. The apparatus includes: a first drawing module 1301, a map display module 1302, a second drawing module 1303, and a map replacement module 1304.

The first drawing module 1301 is configured to draw a first scene picture in a first rendering texture map, the first scene picture being obtained by photographing a virtual scene by a first virtual camera, and the first virtual camera being located at a first position in the virtual scene.

The map display module 1302 is configured to display the first rendering texture map in the virtual scene, the virtual scene being used for activity display. In an example, the virtual scene can be displayed in a form of a virtual picture scroll, where the virtual picture scroll is used for showing a level in a form of a picture scroll.

The second drawing module 1303 is configured to draw a second scene picture in a second rendering texture map in response to receiving an activity advancement signal, the second scene picture being obtained by photographing the virtual scene by a second virtual camera, the second virtual camera being located at a second position in the virtual scene, and the second position being different from the first position.

The map replacement module 1304 is configured to replace the first rendering texture map in the virtual scene with the second rendering texture map. The scene picture drawn in the rendering texture map changes in a case that a virtual object within a viewing range corresponding to the virtual camera in the virtual scene changes.

The second drawing module 1303 includes:
a first drawing unit, configured to create the second virtual camera at the first position and create the second rendering texture map in response to receiving the activity advancement signal, the second virtual camera being bound to the second rendering texture map;
a second drawing unit, configured to control the second virtual camera to move from the first position to the second position; and
a third drawing unit, configured to draw the second scene picture in the second rendering texture map according to a picture photographed by the second virtual camera.

The second drawing unit includes:
a first drawing subunit, configured to query the second position from a camera position list according to the first position, the camera position list including position information of virtual cameras in different activities; and
a second drawing subunit, configured to control the second virtual camera to move from the first position to the queried second position.

The second drawing subunit is further configured to:
query a target camera movement trajectory between the first position and the second position from a camera movement trajectory list, the camera movement trajectory list including camera movement trajectory information during movement of the virtual camera between different positions; and
control the second virtual camera to move from the first position to the second position according to the target camera movement trajectory.

The apparatus further includes:
a quantity obtaining module, configured to obtain a camera quantity of created virtual cameras; and
a camera clearing module, configured to clear at least one of the created virtual cameras, and rendering texture maps corresponding to the created virtual cameras according to creation orders of the created virtual cameras in response to the camera quantity being greater than a quantity threshold.

The apparatus further includes:
a map splicing module, configured to transversely splice the second rendering texture map and the first rendering texture map; and
a map switching module, configured to switch the second rendering texture map in the virtual scene to the first rendering texture map in response to receiving a transverse sliding operation on the virtual scene.

The apparatus further includes:
an object determination module, configured to: in response to receiving an interactive operation on the first rendering texture map, determine an interactive virtual object corresponding to the interactive operation, the interactive virtual object belonging to virtual objects in the virtual scene; and
an interactive response module, configured to control the interactive virtual object to respond to the interactive operation, a response picture of the interactive virtual object to the interactive operation being displayed in the first rendering texture map.

The object determination module includes:
a first determination unit, configured to determine a first interactive coordinate of the interactive operation in the first rendering texture map;
a second determination unit, configured to map the first interactive coordinate to a second interactive coordinate in the virtual scene according to a viewing angle of the first virtual camera; and
a third determination unit, configured to determine a virtual object located at the second interactive coordinate in the virtual scene as the interactive virtual object.

The apparatus further includes:
a viewing adjustment module, configured to: in response to receiving a viewing adjustment operation on the first rendering texture map, and an adjustment parameter indicated by the viewing adjustment operation being within an adjustment range, adjust a viewing parameter of the first virtual camera according to the adjustment parameter, the adjustment parameter including at least one of a viewing angle adjustment parameter or a viewing distance adjustment parameter.

In the embodiments of this application, when the virtual picture scroll is initially displayed, the first scene picture drawn by the first rendering texture map is displayed. Different from the manner for displaying static maps in the conventional technology, the first scene picture is photographed by a first virtual camera corresponding to the map, which can implement dynamic tracking of the scene picture. Further, based on a level display function of the virtual picture scroll, when the level advancement signal is received, the second virtual camera is reset, the photographed second scene picture is drawn on the second rendering texture map, and then the first rendering texture map in the virtual picture scroll is replaced with the second rendering texture map. In addition, the scene picture drawn in the rendering texture map changes in a case that a virtual object within a viewing range corresponding to the virtual camera in the virtual scene changes. Compared with the method of displaying a virtual picture scroll through static maps in the conventional technology, the solutions provided in the embodiments of this application can improve content richness of pictures displayed in the virtual picture scroll and enrich the display form.

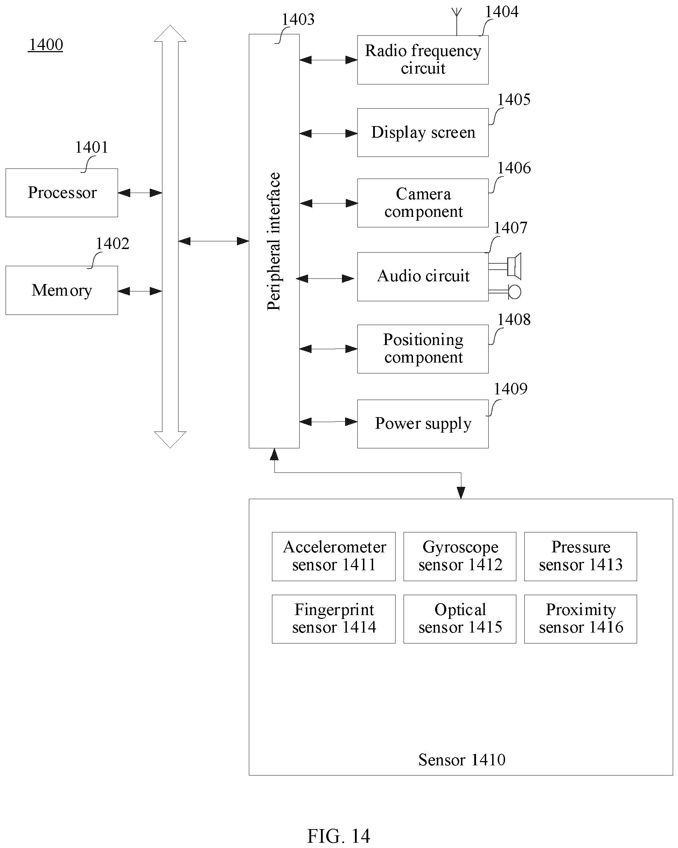

FIG. 14 is a structural block diagram of a terminal 1400 according to an exemplary embodiment of this application. The terminal 1400 may be a portable mobile terminal, for example, a smartphone, a tablet computer, a Moving Picture Experts Group Audio Layer III (MP3) player, or a Moving Picture Experts Group Audio Layer IV (MP4) player. The terminal 1400 may also be referred to as other names such as user equipment and a portable terminal.

Generally, the terminal 1400 includes a processor 1401 and a memory 1402.

The processor 1401 may include one or more processing cores, for example, a 4-core processor or an 8-core processor. The processor 1401 may be implemented by using at least one hardware form of a digital signal processor (DSP), a field-programmable gate array (FPGA), and a programmable logic array (PLA). The processor 1401 may alternatively include a main processor and a coprocessor. The main processor is configured to process data in an awake state, also referred to as a central processing unit (CPU). The coprocessor is a low power consumption processor configured to process data in a standby state. In some embodiments, the processor 1401 may be integrated with a graphics processing unit (GPU). The GPU is configured to render and draw content that needs to be displayed on a display screen. In some embodiments, the processor 1401 may further include an artificial intelligence (AI) processor. The AIprocessor is configured to process a computing operation related to machine learning.

The memory 1402 may include one or more computer-readable storage media. The computer-readable storage medium may be tangible and non-volatile. The memory 1402 may further include a highspeed random access memory and a non-volatile memory, for example, one or more disk storage devices or flash storage devices. In some embodiments, a non-volatile computer-readable storage medium in the memory 1402 is configured to store at least one instruction, the at least one instruction being configured to be executed by the processor 1401 to implement the method provided in the embodiments of this application.

In some embodiments, the terminal 1400 may further include a peripheral interface 1403 and at least one peripheral. Specifically, the peripheral includes: at least one of a radio frequency (RF) circuit 1404, a display screen 1405, a camera assembly 1406, an audio circuit 1407, a positioning component 1408, and a power supply 1409.

In some embodiments, the terminal 1400 further includes one or more sensors 1410. The one or more sensors 1410 include, but are not limited to: an acceleration sensor 1411, a gyro sensor 1412, a pressure sensor 1413, a fingerprint sensor 1414, an optical sensor 1415, and a proximity sensor 1416.

A person skilled in the art may understand that the structure shown in FIG. 14 does not constitute a limitation to the terminal 1400, and the terminal may include more or fewer components than those shown in the figure, or some components may be combined, or a different component deployment may be used. The solutions provided in the embodiments of this application can help to improve content richness of pictures displayed in the virtual picture scroll and enrich the display form.

An embodiment of this application further provides a computer-readable storage medium, storing at least one instruction, at least one program, a code set, or an instruction set, the at least one instruction, the at least one program, the code set, or the instruction set being loaded and executed by a processor to implement the method for displaying a virtual picture scroll according to any one of the foregoing embodiments.

This application further provides a computer program product or a computer program. The computer program product or the computer program includes computer instructions, and the computer instructions are stored in a computer-readable storage medium. A processor of a computer device reads the computer instructions from the computer-readable storage medium and executes the computer instructions, to cause the computer device to perform the method for displaying a virtual picture scroll provided in the foregoing embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely embodiments of this application, but are not intended to limit this application. Any modification, equivalent replacement, and improvement made without departing from the spirit and principle of this application shall fall within the protection scope of this application.

## Claims

1. A method for displaying a virtual scene, performed by a terminal, the method comprising:
drawing a first scene picture in a first rendering texture map, the first scene picture being obtained by photographing a virtual scene by a first virtual camera, and the first virtual camera being located at a first position in the virtual scene;
displaying the first rendering texture map in the virtual scene, the virtual scene being used for activity display;
drawing a second scene picture in a second rendering texture map in response to receiving an activity advancement signal, the second scene picture being obtained by photographing the virtual scene by a second virtual camera, the second virtual camera being located at a second position in the virtual scene, and the second position being different from the first position; and
replacing the first rendering texture map in the virtual scene with the second rendering texture map,
the scene picture drawn in the rendering texture map changing in a case that a virtual object within a viewing range corresponding to the virtual camera in the virtual scene changes.

2. The method according to claim 1, wherein the drawing a second scene picture in a second rendering texture map in response to receiving an activity advancement signal comprises:
creating the second virtual camera at the first position and creating the second rendering texture map in response to receiving the activity advancement signal, the second virtual camera being bound to the second rendering texture map;
controlling the second virtual camera to move from the first position to the second position; and
drawing the second scene picture in the second rendering texture map according to a picture photographed by the second virtual camera.

3. The method according to claim 2, wherein the controlling the second virtual camera to move from the first position to the second position comprises:
querying the second position from a camera position list according to the first position, the camera position list comprising position information of virtual cameras in different activities; and
controlling the second virtual camera to move from the first position to the queried second position.

4. The method according to claim 3, wherein the controlling the second virtual camera to move from the first position to the queried second position comprises:
querying a target camera movement trajectory between the first position and the second position from a camera movement trajectory list, the camera movement trajectory list comprising camera movement trajectory information during movement of the virtual camera between different positions; and
controlling the second virtual camera to move from the first position to the second position according to the target camera movement trajectory.

5. The method according to claim 2, wherein before the creating the second virtual camera at the first position and creating the second rendering texture map, the method further comprises:
obtaining a camera quantity of created virtual cameras; and
clearing at least one of the created virtual cameras, and rendering texture map corresponding to the created virtual camera according to creation orders of the created virtual cameras in response to the camera quantity being greater than a quantity threshold.

6. The method according to any one of claims 1 to 5, wherein after the drawing a second scene picture in a second rendering texture map in response to receiving an activity advancement signal, the method further comprises:
transversely splicing the second rendering texture map and the first rendering texture map; and
after the replacing the first rendering texture map in the virtual scene with the second rendering texture map, the method further comprises:
switching the second rendering texture map in the virtual scene to the first rendering texture map in response to receiving a transverse sliding operation on the virtual scene.

7. The method according to any one of claims 1 to 5, wherein after the displaying the first rendering texture map in the virtual scene, the method further comprises:
in response to receiving an interactive operation on the first rendering texture map, determining an interactive virtual object corresponding to the interactive operation, the interactive virtual object belonging to virtual objects in the virtual scene; and
controlling the interactive virtual object to respond to the interactive operation, a response picture of the interactive virtual object to the interactive operation being displayed in the first rendering texture map.

8. The method according to claim 7, wherein the determining an interactive virtual object corresponding to the interactive operation comprises:
determining a first interactive coordinate of the interactive operation in the first rendering texture map;
mapping the first interactive coordinate to a second interactive coordinate in the virtual scene according to a viewing angle of the first virtual camera; and
determining a virtual object located at the second interactive coordinate in the virtual scene as the interactive virtual object.

9. The method according to any one of claims 1 to 5, wherein after the displaying the first rendering texture map in the virtual scene, the method further comprises:
in response to receiving a viewing adjustment operation on the first rendering texture map, and an adjustment parameter indicated by the viewing adjustment operation being within an adjustment range, adjusting a viewing parameter of the first virtual camera according to the adjustment parameter, the adjustment parameter comprising at least one of a viewing angle adjustment parameter or a viewing distance adjustment parameter.

10. An apparatus for displaying a virtual scene, comprising:
a first drawing module, configured to draw a first scene picture in a first rendering texture map, the first scene picture being obtained by photographing a virtual scene by a first virtual camera, and the first virtual camera being located at a first position in the virtual scene;
a map display module, configured to display the first rendering texture map in the virtual scene, the virtual scene being used for activity display;
a second drawing module, configured to draw a second scene picture in a second rendering texture map in response to receiving an activity advancement signal, the second scene picture being obtained by photographing the virtual scene by a second virtual camera, the second virtual camera being located at a second position in the virtual scene, and the second position being different from the first position; and
a map replacement module, configured to replace the first rendering texture map in the virtual scene with the second rendering texture map, the scene picture drawn in the rendering texture map changing in a case that a virtual object within a viewing range corresponding to the virtual camera in the virtual scene changes.

11. The apparatus according to claim 10, wherein the second drawing module comprises:
a first drawing unit, configured to create the second virtual camera at the first position and create the second rendering texture map in response to receiving the activity advancement signal, the second virtual camera being bound to the second rendering texture map;
a second drawing unit, configured to control the second virtual camera to move from the first position to the second position; and
a third drawing unit, configured to draw the second scene picture in the second rendering texture map according to a picture photographed by the second virtual camera.

12. The apparatus according to claim 11, wherein the second drawing unit comprises:
a first drawing subunit, configured to query the second position from a camera position list according to the first position, the camera position list comprising position information of virtual cameras in different activities; and
a second drawing subunit, configured to control the second virtual camera to move from the first position to the queried second position.

13. The apparatus according to claim 12, wherein the second drawing subunit is further configured to query a target camera movement trajectory between the first position and the second position from a camera movement trajectory list, the camera movement trajectory list comprising camera movement trajectory information during movement of the virtual camera between different positions; and
the second drawing subunit is further configured to control the second virtual camera to move from the first position to the second position according to the target camera movement trajectory.

14. The apparatus according to claim 11, further comprising:
a quantity obtaining module, configured to obtain a camera quantity of created virtual cameras; and
a camera clearing module, configured to clear at least one of the created virtual cameras, and rendering texture maps corresponding to the created virtual cameras according to creation orders of the created virtual cameras in response to the camera quantity being greater than a quantity threshold.

15. The apparatus according to any one of claims 10 to 14, further comprising:
a map splicing module, configured to transversely splice the second rendering texture map and the first rendering texture map; and
a map switching module, configured to switch the second rendering texture map in the virtual scene to the first rendering texture map in response to receiving a transverse sliding operation on the virtual scene.

16. The apparatus according to any one of claims 10 to 14, further comprising:
an object determination module, configured to: in response to receiving an interactive operation on the first rendering texture map, determine an interactive virtual object corresponding to the interactive operation, the interactive virtual object belonging to virtual objects in the virtual scene; and
an interactive response module, configured to control the interactive virtual object to respond to the interactive operation, a response picture of the interactive virtual object to the interactive operation being displayed in the first rendering texture map.

17. The apparatus according to claim 16, wherein the object determination module comprises:
a first determination unit, configured to determine a first interactive coordinate of the interactive operation in the first rendering texture map;
a second determination unit, configured to map the first interactive coordinate to a second interactive coordinate in the virtual scene according to a viewing angle of the first virtual camera; and
a third determination unit, configured to determine a virtual object located at the second interactive coordinate in the virtual scene as the interactive virtual object.

18. The apparatus according to any one of claims 10 to 14, further comprising:
a viewing adjustment module, configured to: in response to receiving a viewing adjustment operation on the first rendering texture map, and an adjustment parameter indicated by the viewing adjustment operation being within an adjustment range, adjust a viewing parameter of the first virtual camera according to the adjustment parameter, the adjustment parameter comprising at least one of a viewing angle adjustment parameter or a viewing distance adjustment parameter.

19. A computer device, comprising a processor and a memory, the memory storing at least one instruction, at least one program, a code set, or an instruction set, the at least one instruction, the at least one program, the code set, or the instruction set being loaded and executed by the processor to implement the method for displaying a virtual scene according to any one of claims 1 to 9.

20. A computer-readable storage medium, storing at least one instruction, at least one program, a code set, or an instruction set, the at least one instruction, the at least one program, the code set, or the instruction set being loaded and executed by a processor to implement the method for displaying a virtual scene according to any one of claims 1 to 9.
